# EUROPEAN PATENT APPLICATION

(11) **EP 2 259 173 A2**
(43) Date of publication of application: **08.12.2010**
(21) Application number: 10164106.6
(22) Date of filing: 27.05.2010
(51) Int. Cl.: G06F 3/042

(54) **Touch detection apparatus**

(30) Priority: 01.06.2009 CN 200910084931
(71) Applicant: Beijing Irtouch Systems Co., Ltd., Beijing 100016 (CN)
(72) Inventor: Ye, Xinlin, 100016, Beijing (CN); Liu, Jianjun, 100016, Beijing (CN); Liu, Xinbin, 100016, Beijing (CN); Zou, Zhenzhong, 100016, Beijing (CN)
(74) Representative: Äkräs, Tapio Juhani

(57) **Abstract**

A touch detection apparatus is disclosed, which comprises: a frame which defines a planar touch detection region; at least one surface light-emitting body which is disposed on the frame; at least one light source which is placed at the end of the surface light-emitting body; at least one detector which is disposed on the frame and used to detect information of a touch object in the touch detection region; and a processing circuit which is connected to the detector and used to receive information detected by the at least one detector and calculate position information of the touch object based on the received information. In the touch detection apparatus of the present invention, the light source and the surface light-emitting body are disposed on the edges of the frame, thus a good light source can be provided to the touch detection apparatus, and the cost of the entire touch detection apparatus can be reduced due to the low cost of the surface light-emitting body.

## Description

### Technical Field of the Invention

The present invention relates to a photoelectric detection apparatus, more particularly, to a touch detection apparatus.

### Background of the Invention

Touch screen, as a convenient and intuitive man-machine interaction device, has been accepted by people. There are a variety of touch screens in the market. One kind is the touch screen which uses camera to position a touch object. To achieve high precision, this kind of touch screen generally needs to operate with light source, such as LED. However, using LED as light source would cause high cost, especially for the touch screens with large size.

### Summary of the Invention

In order to overcome the defects in the prior art, the present invention provides a touch detection apparatus with low cost.

According to an aspect of the present invention, there is provided a touch detection apparatus comprising: a frame which defines a planar touch detection region; at least one surface light-emitting body which is disposed on the frame; at least one light source which is placed at the end of the surface light-emitting body; at least one detector which is disposed on the frame and used to detect information of a touch object in the touch detection region; and a processing circuit which is connected to the detector and used to receive the information detected by the at least one detector and calculate position information of the touch object based on the received information.

Further, the touch detection region has a rectangular shape, and the at least one surface light-emitting body is disposed on at least one edge of the frame.

Still further, the at least one surface light-emitting body is disposed on three edges of the frame.

Further, the number of the at least one surface light-emitting body is two or more than two, and a light source is disposed between every two of the surface light-emitting bodies.

Still further, the number of the at least one detector is two, and the detectors are disposed at corners of the frame and at both ends of the edge of the frame where the surface light-emitting body is not disposed, respectively.

Further, the detector is an image capturing device, and the processing circuit is operated based on triangulation.

Still further, the detector is a light-emitting diode or a light-emitting triode. Further, the surface light-emitting body is a flexible light guide body.

Still further, the flexible light guide body is a flexible light guide stick or a flexible light guide bar.

Further, the surface light-emitting body is a surface light-emitting optical fiber.

Still further, the surface light-emitting optical fiber is a uniform surface light-emitting optical fiber.

Further, the surface light-emitting optical fiber is a single-core surface light-emitting optical fiber or a multi-core surface light-emitting optical fiber.

Still further, the surface light-emitting optical fiber is a solid-core surface light-emitting optical fiber or a liquid-core surface light-emitting optical fiber.

Further, the light source is an infrared light source, and the image capturing device is an infrared camera.

### Brief Description of the Drawings

Fig. 1 is a schematic diagram showing the structure of the touch detection apparatus in accordance with an embodiment of the present invention; and
Fig. 2 is a schematic diagram showing the connection between the light source and the surface light-emitting body shown in Fig. 1.

### Detailed Description of the Preferred Embodiments

It is believed that the above and other objectives, features and advantages of the present invention will become clearer through the following detailed description of the embodiments of the present invention in conjunction with the drawings.

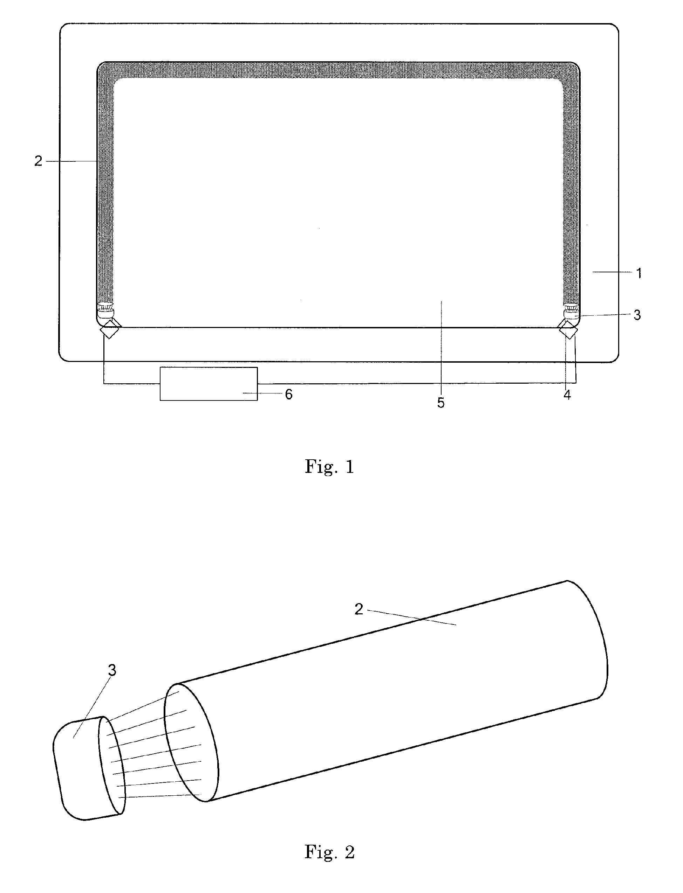

Figs. 1 and 2 illustrate the touch detection apparatus according to an embodiment of the present invention. As shown in Fig. 1, the touch detection apparatus includes a frame 1, a surface light-emitting body 2, two light sources 3, two detectors 4 and a processing circuit 6. The frame 1 defines a planar touch detection region 5, that is, the frame 1 surrounds the touch detection region 5. In the embodiment, the touch detection region 5 is rectangular. Alternatively, the touch detection region 5 can be other shapes. The surface light-emitting body 2 and the detectors 4 are disposed on the frame 1. It can be seen from Fig. 1 that the surface light-emitting body 2 and the detectors 4 are disposed on the edges of the frame 1 and close to the touch detection region 5. The surface light-emitting body shown in Fig. 1 is a cylindrical surface light-emitting optical fiber disposed on three edges of the frame 1. Alternatively, other types of surface light-emitting body can be used, such as a flexible light guide body such as a flexible light guide stick, a flexible light guide bar, etc. The surface light-emitting optical fiber in the embodiment can be a uniform surface light-emitting optical fiber, a single-core surface light-emitting optical fiber, a multi-core surface light-emitting optical fiber, a solid-core surface light-emitting optical fiber or a liquid-core surface light-emitting optical fiber. The surface light-emitting body 2 may be disposed only on one or two edges of the frame 1. Alternatively, the surface light-emitting body 2 can be disposed in other manners. In addition, the number of the surface light-emitting bodies 2 can be two or more than two. In this case, there is a light source between every two of the surface light-emitting bodies. The detectors 4 shown in Fig. 1 are infrared cameras. Alternatively, the detector can be other types of image capturing device or other types of detector such as a photoelectric diode or a photoelectric triode. The number of the detectors 4 can also be two or more than two. The two infrared cameras are disposed at corners of the frame 1 and at both ends of the edge of the frame 1 where the surface light-emitting body 2 is not disposed, respectively. That is, there is no surface light-emitting body 2 on the edge of the frame 1 between the two infrared cameras. The light sources 3 are placed at the end of the surface light-emitting body 2. In Fig. 1, the two light sources 3 are the infrared light sources, and they are respectively disposed at both ends of the surface light-emitting body 2. Alternatively, the light source 3 can be other types of light source and the number of the light sources 3 can be one or two or more. The detectors 4 are used to detect information of a touch object in the touch detection region 5. In Fig. 1, the detectors 4 capture the image information of the touch object. The processing circuit 6 is connected to the detectors 4 to receive the information detected by the detectors 4 and calculate the position information of the touch object based on the received information. In Fig. 1, when the touch object enters into the touch detection region 5, the two infrared cameras 4 capture the image of the touch object and transmit the

image of the touch object to the processing circuit 6. Upon receiving the image of the touch object captured by the two infrared cameras 4, the processing circuit 6 calculates the position information of the touch object in the touch region using triangulation based on the received image information. The triangulation is well known in the art and its description will be omitted here.

The above surface light-emitting body means a kind of light guide object which can transmit the light from an incident surface to an emergent surface and can also transmit the light out away from the side surface, thus the whole light guide object can emit the light. The flexible light guide body is a soft light guide material which is made by filling a kind of flexible nanometer material into a fluororesin tube. In practice, the flexible light guide body can also be other types. The surface light-emitting optical fiber means a kind of optical fiber which can transmit the light from an incident surface to an emergent surface and also transmit the light out away from the coating of the optical fiber, thus the side surface of the fiber can emit the light. Alternatively, such optical fiber can also be referred to as side-glowing optical fiber, linear optical fiber, or leak type optical fiber.

According to the touch detection apparatus described in the above embodiment, the light source and the surface light-emitting body are disposed on the edges of the frame, thus a good light source can be provided to the touch detection apparatus, and the cost of the entire touch detection apparatus can be reduced due to the low cost of the surface light-emitting body.

The touch detection apparatus of the embodiment can be used in a touch screen. It can also be applied to a display to form a touch display. In addition, it can also be applied to other fields.

Although the touch detection apparatus is described in detail in conjunction with the preferred embodiment, the present invention is not limited as above. It should be understood for the persons skilled in the art that the above embodiments may be varied, replaced or modified without departing from the spirit and the scope of the present invention.

## Claims

1. A touch detection apparatus, comprising:
a frame which defines a planar touch detection region;
at least one surface light-emitting body which is disposed on said frame;
at least one light source which is placed at the end of said surface light-emitting body;
at least one detector which is disposed on said frame and used to detect information of a touch object in said touch detection region; and
a processing circuit which is connected to said detector and used to receive the information detected by said at least one detector and calculate position information of said touch object based on the received information.

2. The touch detection apparatus according to claim 1, wherein said touch detection region has a rectangular shape, and said at least one surface light-emitting body is disposed on at least one edge of said frame.

3. The touch detection apparatus according to claim 2, wherein said at least one surface light-emitting body is disposed on three edges of said frame.

4. The touch detection apparatus according to claim 2, wherein the number of said at least one surface light-emitting body is two or more than two, and a light source is disposed between every two of said surface light-emitting bodies.

5. The touch detection apparatus according to claim 3, wherein the number of said at least one detector is two, and said detectors are disposed at corners of said frame and at both ends of the edge of said frame where said at least one surface light-emitting body is not disposed, respectively.

6. The touch detection apparatus according to any one of claims 1 to 5, wherein said at least one detector is an image capturing device, and said processing circuit is operated based on triangulation.

7. The touch detection apparatus according to any one of claims 1 to 5, wherein said at least one detector is a light-emitting diode or a light-emitting triode.

8. The touch detection apparatus according to claim 6, wherein said at least one surface light-emitting body is a flexible light guide body.

9. The touch detection apparatus according to claim 8, wherein said flexible light guide body is a flexible light guide stick or a flexible light guide bar.

10. The touch detection apparatus according to claim 6, wherein said at least one surface light-emitting body is a surface light-emitting optical fiber.

11. The touch detection apparatus according to claim 10, wherein said surface light-emitting optical fiber is a uniform surface light-emitting optical fiber.

12. The touch detection apparatus according to claim 10, wherein said surface light-emitting optical fiber is a single-core surface light-emitting optical fiber or a multi-core surface light-emitting optical fiber.

13. The touch detection apparatus according to claim 10, wherein said surface light-emitting optical fiber is a solid-core surface light-emitting optical fiber or a liquid-core surface light-emitting optical fiber.

14. The touch detection apparatus according to claim 10, wherein said at least one light source is an infrared light source, and said image capturing device is an infrared camera.
